# EUROPEAN PATENT APPLICATION

(11) **EP 1 830 559 A1**
(43) Date of publication of application: **05.09.2007**
(21) Application number: 06020605.9
(22) Date of filing: 29.09.2006
(51) Int. Cl.: H04N 5/00, H04N 7/26

(54) **Method and apparatus for controlling a recording function of a mobile communication terminal**

(30) Priority: 29.09.2005 KR 20050091424
(71) Applicant: LG Electronics Inc., Yongdungpo-Gu Seoul 150-010 (KR)
(72) Inventor: Kim, Hyung Jin, Seoul (KR)
(74) Representative: Katérle, Axel

(57) **Abstract**

A method and apparatus for controlling a recording function of a mobile communication terminal are disclosed. The terminal determines an amount of available storage capacity for storing a received multimedia broadcast, and selectively records and stores frames of the broadcast according to a recording speed signal. Another embodiment is disclosed wherein the terminal determines whether the screen size of the received broadcast must be adjusted to store in the terminal.

## Description

This application claims the benefit of the Korean Patent Application No. 10-2005-0091424, filed on September 29, 2005, which is hereby incorporated by reference as if fully set forth herein.

### BACKGROUND OF THE INVENTION

### Field of the Invention

The present invention relates to a mobile communication terminal ("terminal"), and more particularly, to a mobile communication terminal and method for controlling a recording function.

### Discussion of the Related Art

Generally, recording a multimedia program to storage using a terminal according to a related art is as follows. First, a terminal receives a broadcast program list for each channel. The terminal selects a broadcast program to record according to the received broadcast program list and then schedules recording the selected broadcast program to a storage medium.

When receiving a broadcast program, the terminal decides whether the program matches the prescheduled program. If the program matches the prescheduled program, the terminal records the received broadcast program. If the program does not match the prescheduled program, the terminal does not record the program.

However, in the related art, if the terminal's recording capacity is smaller than that required by the broadcast program to be recorded, the terminal is unable to record the whole broadcast program. Also, the terminal is unable to control the recording speed of a broadcast program according to the recording capacity of the terminal

Moreover, in the related art, the terminal is unable to control a screen size of a broadcast program to be recorded according to the terminal's recording capacity.

### SUMMARY OF THE INVENTION

Accordingly, the present invention is directed to a mobile communication terminal and method of controlling the recording function that substantially obviate one or more problems due to limitations and disadvantages of the related art.

An object of the present invention is to provide a terminal and method of controlling a recording function, by which a broadcast program can be efficiently recorded in case the terminal's recording capacity is smaller than required by the broadcast program to be recorded.

Another object of the present invention is to provide a terminal and method of controlling a recording function by which a recording speed of a broadcast program to be recorded can be controlled according to the terminal's recording capacity.

Another object of the present invention is to provide a terminal and method of controlling a recording function by which a plurality of frames can be selectively recorded according to a recording speed of a broadcast program.

A further object of the present invention is to provide a terminal and method of controlling a recording function by which the screen size of a broadcast program to be recorded can be controlled according to a terminal's recording capacity.

To achieve these objects and other advantages and in accordance with the purpose of the invention, as embodied and broadly described herein, a mobile communication terminal controlling a recording function according to the present invention includes a receiving unit receiving broadcast program information and a broadcast program wherein the broadcast program comprises an audio portion and a video portion, an input unit generating a broadcast selection signal and a broadcast recording signal according to the received broadcast program information, a control unit generating a recording speed signal and a memory unit storing the broadcast program according to the broadcast selection signal and the recording speed signal.

Preferably, the control unit generates the recording speed signal according to an amount of available storage capacity of the memory unit, and the control unit determines the amount of available storage capacity for storing the selected broadcast program according to the broadcast selection signal.

Preferably, frames selected from the video portion are stored in the memory unit according to the recording speed signal, and the complete audio portion is stored in the memory unit.

Preferably, the audio portion is synchronized with the stored frames when the stored frames are replayed from the memory unit.

In another aspect of the present invention, a mobile communication terminal controlling a recording function includes a receiving unit receiving broadcast program information and a broadcast program, an input unit generating a broadcast selection signal and a broadcast recording signal according to the received broadcast program information, a control unit for generating a screen size adjustment signal, a screen size adjusting unit adjusting the size of the received broadcast program display according to the screen size adjustment signal, and a memory unit storing the broadcast program according to the broadcast selection signal and the screen size adjustment signal.

Preferably, the screen size adjusting unit includes a decoding unit decoding a plurality of frames of the selected broadcast program according to the broadcast selection signal, and an encoding unit encoding each of the decoded frames according to the screen size adjustment signal.

Preferably, the control unit generates the screen size adjustment signal according to an amount of available storage capacity of the memory unit, or the control unit generates the screen size adjustment signal according to a user's selection.

Preferably, the selected broadcast program according to the broadcast selection signal is replayed from the memory unit.

In another aspect of the present invention, a mobile communication terminal controlling a recording function includes a receiving unit for receiving broadcast program information and a broadcast program wherein the broadcast program comprises an audio portion and a video portion, wherein each of the audio portion and video portion are broadcast in a digital transmission format, an input unit generating a broadcast selection signal and a broadcast recording signal according to the received broadcast program information, a control unit for generating a recording speed signal and a screen size adjustment signal, a screen size adjusting unit adjusting the size of the selected broadcast program display according to the screen size adjustment signal, and a memory unit storing the received broadcast program according to the broadcast selection signal, the recording speed signal and the screen size adjustment signal.

In another aspect of the present invention, a method of controlling a recording function in a mobile communication terminal includes receiving broadcast program information, generating a broadcast selection signal and a broadcast recording signal according to the received broadcast program information, receiving the selected broadcast program according to the broadcast selection signal wherein the broadcast program comprises an audio portion and a video portion, generating a recording speed signal for the selected broadcast program according to an amount of available storage capacity of a terminal memory, and recording the selected broadcast program in the terminal memory according to the recording speed signal.

Preferably, the method further includes storing selected frames from a plurality of frames of the video portion of the broadcast program according to the recording speed signal, and storing the complete audio portion of the broadcast program.

Preferably, the audio portion is synchronized with the stored selected frames when the stored selected frames are replayed from the terminal memory.

In another aspect of the present invention, a method of controlling a recording function in a mobile communication terminal includes receiving broadcast program information, generating a broadcast selection signal for selecting a broadcast program and a broadcast recording signal according to the received broadcast program information, wherein the broadcast program includes an audio portion and a video portion, receiving the selected broadcast program according to the broadcast selection signal, generating a screen size adjustment signal according to an amount of available storage capacity of a terminal memory, converting the size of the selected broadcast program display according to the screen size adjustment signal and recording the converted broadcast program in the terminal memory according to the screen size adjustment signal.

Preferably, the method further includes determining the amount of available storage capacity for storing the selected broadcast program.

In a further aspect of the present invention, a method of controlling a recording function in a mobile communication terminal includes receiving broadcast program information, generating a broadcast selection signal for selecting a broadcast program and a broadcast recording signal according to the received broadcast program information wherein the broadcast program includes an audio portion and a video portion, each broadcast in a digital transmission format, generating a recording speed signal according to an amount of available storage capacity of a terminal memory, generating a screen size adjustment signal according to the amount of available storage capacity, converting the size of the selected broadcast program display according to the screen size adjustment signal, and recording the converted broadcast program in the terminal memory according to the screen size adjustment signal.

Preferably, the method includes selecting frames of the video portion of the converted broadcast program according to the recording speed signal, and storing the selected frames and complete audio portion in the terminal memory.

Preferably, the audio portion is synchronized with the stored selected frames when the stored selected frames are replayed from the terminal memory.

It is to be understood that both the foregoing general description and the following detailed description of the present invention are exemplary and explanatory and are intended to provide further explanation of the invention as claimed.

### BRIEF DESCRIPTION OF THE DRAWINGS

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

The accompanying drawings, which are included to provide a further understanding of the invention and are incorporated in and constitute a part of this application, illustrate embodiments of the invention and together with the description serve to explain the principle of the invention. In the drawings:

FIG. 1 is a block diagram of a mobile communication terminal controlling a recording function according to one embodiment of the present invention;

FIG. 2 is a block diagram of a mobile communication terminal controlling a recording function according to another embodiment of the present invention;

FIG. 3 is a flowchart of a method of controlling a recording function in a mobile communication terminal according to a one embodiment of the present invention;

FIG. 4 is a flowchart of a method of controlling a recording function in a mobile communication terminal according to another embodiment of the present invention;

FIG. 5 is a block diagram of a mobile communication terminal controlling a recording function according to another embodiment of the present invention;

FIG. 6 is a flowchart of a method of controlling a recording function in a mobile communication terminal according to another embodiment of the present invention;

FIG. 7 is a block diagram for explaining a method of adjusting a screen size according to one embodiment of the present invention;

FIG. 8 is a block diagram of a mobile communication terminal controlling a recording function according to a another embodiment of the present invention; and

FIG. 9 is a flowchart of a method of controlling a recording function in a mobile communication terminal according to another embodiment of the present invention.

### DETAILED DESCRIPTION OF THE INVENTION

Reference will now be made in detail to the preferred embodiments of the present invention, examples of which are illustrated in the accompanying drawings. Wherever possible, the same reference numbers will be used throughout the drawings to refer to the same or like parts.

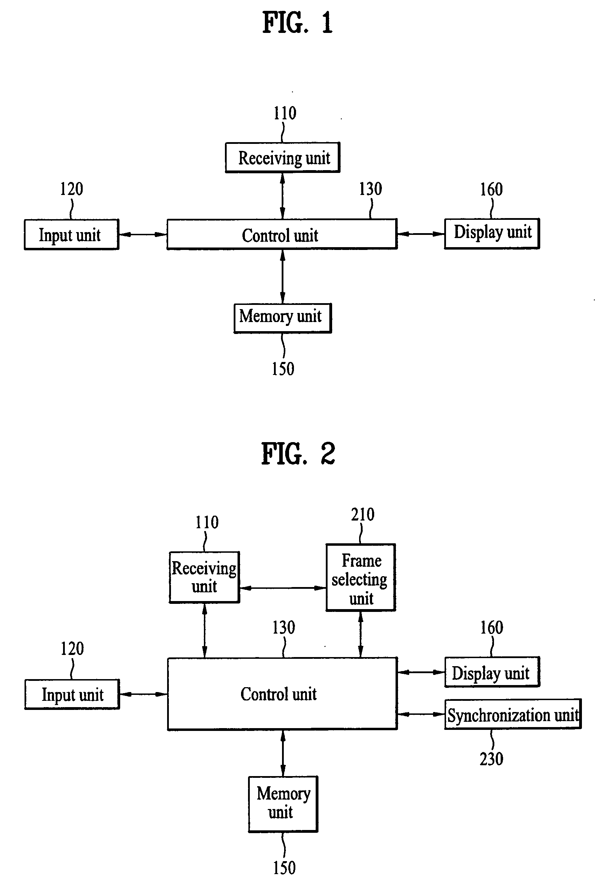

First of all, a mobile communication terminal having a recording control function according to the present invention is explained with reference to FIG. 1 as follows. FIG. 1 is a block diagram of a mobile communication terminal having a recording control function according to one embodiment of the present invention. The terminal illustrated in FIG. 1 includes a receiving unit 110, an input unit 120, a control unit 130, a memory unit 150 and a display unit 160. The receiving unit 110 receives broadcast program information and broadcast programs.

The broadcast program information includes at least one of a transmission channel of a broadcast program, a title of a broadcast program, summary information of a broadcast program, a broadcast time of a broadcast program and the size of a broadcast program.

The broadcast program information may include the broadcast program information attributed to an electronic program guide ("EPG") or an electronic service guide ("ESG"). The broadcast program information is not limited to the EPG or ESG but can include various information of a broadcast program.

The EPG is an additional channel service of digital multimedia broadcasting ("DMB") based on the standards for a broadcast service of a mobile communication terminal. For instance, the EPG includes service information and program information.

The ESG is also an additional channel service of digital video broadcasting ("DVB") based on the standards for a broadcast service of a mobile communication terminal. For instance, the ESG includes a service description ("SD") corresponding to the channel information, a contents description ("CD") corresponding to the broadcast program information and a schedule event ("SE") corresponding to time information for the broadcast program.

The broadcast programs include programs by DMB (digital multimedia broadcasting), DAB (digital audio broadcasting), DVB-H (digital video broadcasting-handheld), DVB-T (digital video broadcasting-terrestrial), MediaFLO (forward link only) and the like.

The input unit 120 generates a broadcast selection signal for selecting a broadcast program and a broadcast recording signal according to the received broadcast program information.

For instance, the input unit 120 is able to generate the broadcast selection signal and the broadcast recording signal using prescribed keys provided to the terminal. Optionally, the input unit 120 is able to use function keys separately provided to the mobile communication terminal to generate the broadcast selection signal and the broadcast recording signal. If a broadcast program to be recorded is selected by a user of the terminal, the input unit 120 is able to generate the broadcast selection signal. If at least two broadcast programs are selected by the user, the input unit 120 is able to generate at least two broadcast selection signals for the selected at least two broadcast programs, respectively.

In case of recognizing an audio signal command for a selection of a specific broadcast program, the input unit 120 is able to generate the broadcast selection signal.

The input unit 120 is able to generate the broadcast selection signal and the broadcast recording signal for a currently received broadcast program. The broadcast recording signal for the currently received broadcast program means a recording execution signal. The input unit 120 is able to generate the broadcast selection signal and the broadcast recording signal for a broadcast program to be received in the future. In this case, the broadcast recording signal for the broadcast program to be received in the future means a reservation recording signal.

The control unit 130 controls overall operations of the terminal such as an operation of receiving/transmitting a call and the like as well as the overall operations associated with a reception of a broadcast program.

In the present invention, the control unit 130 decides whether to adjust a recording speed of the selected broadcast program and to generate a recording speed signal.

The recording speed means a recording speed for a plurality of frames configuring a broadcast program. For instance, if 30 frames are recorded per one second for a broadcast program, the recording speed corresponds to a 30 frames/s.

The control unit 130 is able to decide whether to adjust the recording speed of the selected broadcast program according to a user's selection. The memory unit 150 stores the selected broadcast program according to the decided recording speed.

To store the broadcast program, the memory unit 150 can be separately provided to the terminal. Alternatively, the memory unit 150 may include all storage spaces of the terminal.

The memory unit 150 stores the selected broadcast program according to the decided recording speed for a frame transmission speed of the selected broadcast program.

For instance, if the transmission speed of the selected broadcast program is a 30 frames/s and if the recording speed signal is a 1 frame/s, the memory unit 150 stores 1 frame among 30 frames received for 1 second.

For another instance, if the transmission speed of the selected broadcast program is a 30 frames/s and if the recording speed signal is a 3 frames/s, the memory unit 150 stores 3 frames among 30 frames received for 1 second.

For another instance, if the transmission speed of the selected broadcast program is a 30 frames/s and if the recording speed signal is a 1/3 frame/s, the memory unit 150 1 frame among 90 frames received for 3 seconds.

The display unit 160 displays the recorded broadcast program according to the decided recording speed. For instance, the display unit 160 is able to display 1 frame among 30 frames received for 1 second if the recording speed signal is a 1 frame/s. The display unit 160 is able to display 3 frames among 30 frames received for 1 second if the recording speed signal is a 3 frames/s. The display unit 160 is able to display 1 frame among 90 frames received for 3 seconds if the recording speed signal is a 1/3 frame/s.

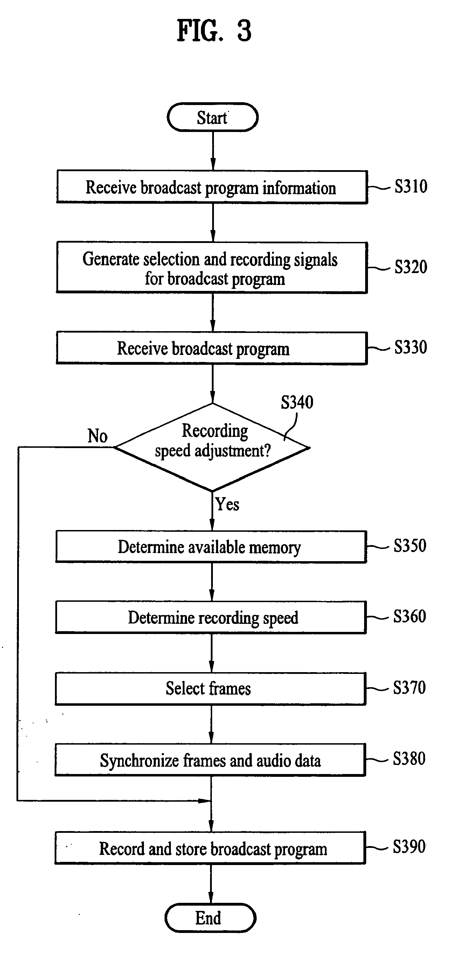

A terminal and method for controlling a recording function are explained in detail with reference to FIG. 2 and FIG. 3 as follows.

FIG. 2 is a block diagram of a mobile communication terminal controlling a recording function according to a second embodiment of the present invention, and FIG. 3 is a flowchart of a method of controlling a recording function in a mobile communication terminal according to one embodiment of the present invention.

Referring to FIG. 2, a mobile communication terminal controlling a recording function according to a second embodiment of the present invention includes the elements 110, 120, 130, 150 and 160 shown in FIG. 1 and further includes a frame selecting unit 210 and a synchronization unit 230.

The receiving unit 110 receives broadcast program information (S310). In particular, the receiving unit 110 receives the broadcast program information, which includes at least one of a transmission channel of a broadcast program, a title of a broadcast program, summary information of a broadcast program, a broadcast time of a broadcast program and size information of a broadcast program.

The broadcast program information may include the broadcast program information attributed to an EPG or an ESG. The broadcast program information is not limited to the EPG or ESG but can include all kinds of information for a broadcast program.

The input unit 120 generates a broadcast selection signal for selecting a broadcast program and a broadcast recording signal according to the received broadcast program information (S320).

For instance, the input unit 120 is able to generate the broadcast selection signal if a broadcast program to be recorded is selected by a user of the terminal. For instance, if at least two broadcast programs are selected by the user, the input unit 120 is able to generate at least two broadcast selection signals for the selected broadcast programs, respectively. When recognizing an audio signal commanding for a selection of a specific broadcast program, the input unit 120 is able to generate the selection signal.

The input unit 120 is able to generate the broadcast selection signal and the broadcast recording signal for a currently received broadcast program. The broadcast recording signal for the currently received broadcast program means a recording execution signal. The input unit 120 is able to generate the broadcast selection signal and the broadcast recording signal for a broadcast program to be received in the future. The broadcast recording signal for the broadcast program to be received in the future means a reservation recording signal.

The receiving unit 110 receives the selected broadcast program according to the broadcast selection signal (S330) using a digital broadcast system including DMB (digital multimedia broadcasting), DAB (digital audio broadcasting), DVB-H (digital video broadcasting-handheld), DVB-T (digital video broadcasting-terrestrial), MediaFLO (forward link only) and the like.

The control unit 130 determines whether to adjust a recording speed of the selected broadcast program according to the broadcast recording signal (S340).

For instance, in case 30 frames are recorded per one second for a broadcast program, the recording speed corresponds to a 30 frames/s.

The control unit 130 is able to determine whether to adjust the recording speed of the selected broadcast program according to a user's selection.

Alternatively, in case of being set to a default to adjust the recording speed according to a generation of the recording signal, the control unit 130 determines to adjust the recording speed of the selected broadcast program and to generate a recording speed signal.

In particular, the control unit 130 determines the available storage capacity of the memory unit 150 (S350). The available storage capacity means an overall storage capacity of the memory unit 150 for storing recorded broadcasts. Alternatively, the available storage capacity means a portion of the overall recording capacity determined by the user.

The control unit 130 determines the recording speed of the received broadcast program according to the determined available storage capacity (S360).

In case an automatic calculation function for the recording speed is set, the control unit 130 automatically calculates the recording speed and is able to set the automatically calculated recording speed as the recording speed of the selected broadcast program.

Alternatively, the control unit 130 is able to set a recording speed selected by the user as the recording speed of the selected broadcast program.

The control unit 130 determines the recording speed signal by comparing the determined available storage capacity to a size or volume of the received broadcast program.

For instance, if the available storage capacity is 900Kb, if the size of the broadcast program is 27Mb and if a frame receiving speed is a 30 frames/s, the control unit 130 is able to set a 1 frame/s, which is 1/30 of the frame receiving speed, as the recording speed since the available storage capacity corresponds to 1/30 of the size of the broadcast program. In this case, the '1 frame/s' means that 1 frame is recorded for a second among the 30 frames per second received according to the frame receiving speed.

For another instance, if the available storage capacity is 900Kb, if the size of the broadcast program is 9Mb and if a frame receiving speed is a 30 frames/s, the control unit 130 is able to decide 3 frame/s, which is 1/10 of the frame receiving speed, as the recording speed since the recording capacity corresponds to 1/10 of the size of the broadcast program. In this case, the '3 frames/s' means that 3 frames are recorded for a second among the 30 frames per second received according to the frame receiving speed.

For another instance, if the available storage capacity is 300Kb, if the size of the broadcast program is 27Mb and if a frame receiving speed is a 30 frames/s, the control unit 130 is able to decide 1/3 frame/s, which is 1/90 of the frame receiving speed, as the recording speed since the available storage capacity corresponds to 1/90 of the size of the broadcast program. In this case, the '1/3 frame/s' means that 1/3 frame for a second (or 1 frame for 3 seconds) is recorded among the 30 frames per second (or the 90 frames per 3 seconds) received according to the frame receiving speed.

The frame selecting unit 210 selects specific frames from a plurality of frames configuring the broadcast program according to the decided recording speed (S370).

If the recording speed signal is a 1 frame/s, the frame selecting unit 210 is able to select 1 frame from 30 frames received for 1 second. The frame selecting unit 210 is able to select a frame received at a specific timing point from the 30 frames. In this case, the specific timing point is set by a user or is randomly decided by the frame selecting unit 210.

If the recording speed signal is a 3 frames/s, the frame selecting unit 210 is able to select 3 frames from 30 frames received for 1 second. In this case, the frame selecting unit 210 divides the 30 frames into 3 frame blocks each of which includes 10 frames and then selects 1 frame from each of the three frame blocks. In doing so, a position of the selected 1 frame is identical in each of the frame blocks.

If the recording speed signal is a 1/3 frame/s, the frame selecting unit 210 is able to select 1 frame from 90 frames received for 3 seconds.

The frame selecting unit 210 is able to select prescribed frames from a plurality of the frames with a predetermined receiving time interval according to the recording speed signal.

The synchronization unit 230 synchronizes audio data of the broadcast program with the selected frames (S380).

Each of the audio data and the selected frames has transmission time information. The synchronization unit 230 synchronizes the audio data with the selected frames using the transmission time information.

For instance, if there are 5 frames selected per 1 second, the synchronization unit 230 discriminates audio data corresponding to the 5 frames, respectively. So, the synchronization unit 230 synchronizes the selected 5 frames with the audio data of the broadcast program received for 1 second with reference to the discriminated audio data. The synchronization unit 230 is able to synchronize the audio data with the frames using a timetable.

The memory unit 150 stores the broadcast program according to the recording speed signal (S390). The memory unit 150 stores the selected broadcast program according to the recording speed signal for a frame transmission speed of the selected broadcast program.

If the frame transmission speed of the selected broadcast program is a 30 frames/s and if the recording speed signal is a 1 frame/s, the memory unit 150 is able to make a recording of 1 frame among 30 frames received for 1 second.

If the frame transmission speed of the selected broadcast program is a 30 frames/s and if the recording speed signal is a 1/3 frame/s, the memory unit 150 is able to make a recording of 1 frame among 90 frames received for 3 seconds.

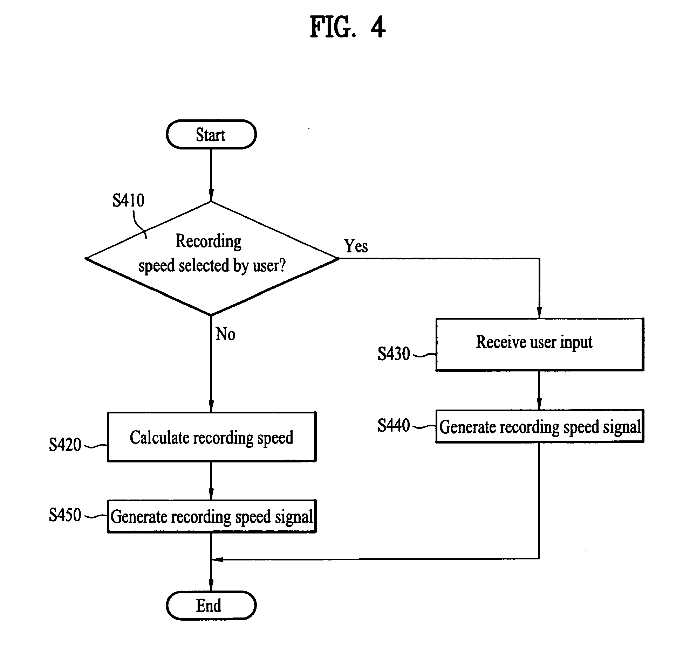

A method of controlling a recording in terminal according to the present invention is explained in detail with reference to FIG. 1 and Fig. 4 as follows.

FIG. 4 is a flowchart of a method of controlling a recording function in a terminal according to another embodiment of the present invention.

Referring to FIG. 1 and FIG. 4, the control unit 130 determines whether a recording speed is selected by a user (S410).

As a result of the decision, if it is determined that the recording speed is not selected by the user, the control unit 130 calculates the recording speed (S420).

For instance, the control unit 130 is able to calculate the recording speed of a broadcast program automatically if the recording speed of the broadcast program is to be adjusted.

For another instance, the control unit 130 is able to calculate the recording speed of a broadcast program automatically according to available storage capacity for recording the broadcast program.

If it is determined that the recording speed is selected by the user, the control unit 130 receives the user's input (S430) and generates a recording speed signal (S440). In this case, the recording speed signal means the signal for selecting a specific recording speed according to a selection made by a user of the mobile communication terminal.

For instance, the input unit 120 is able to generate the recording speed selecting signal for a recording speed selected by the user from a plurality of recording speeds displayed on the display unit 160.

The control unit 130 generates the recording speed signal of the broadcast program according to the input provided by the user (S440) or by a calculation based upon available storage capacity (S420 and S450).

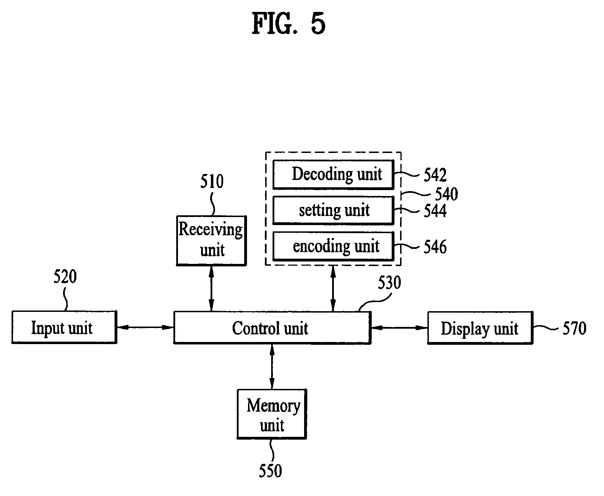

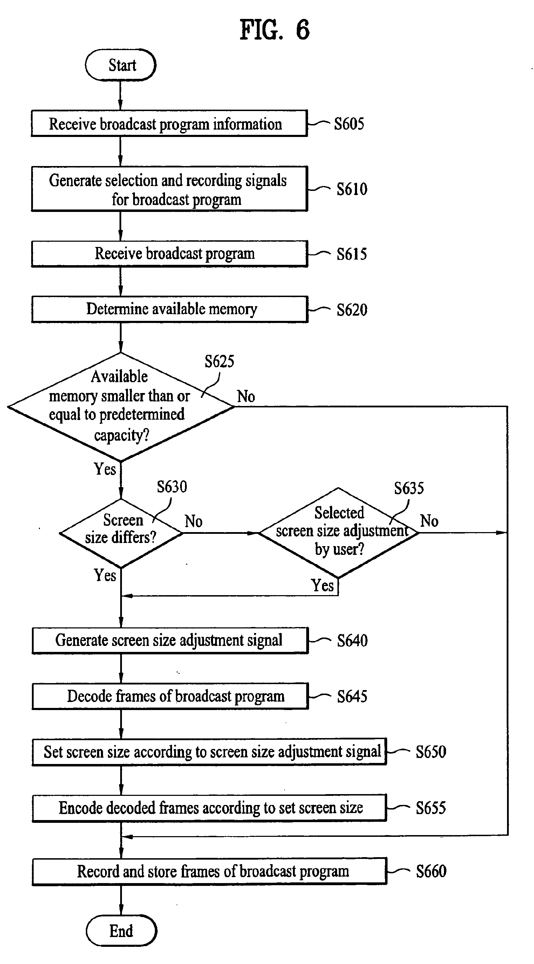

A terminal controlling a recording function and a method of controlling a recording function in the mobile communication terminal according to the present invention are explained in detail with reference to FIG. 5 and FIG. 6 as follows.

FIG. 5 is a block diagram of a terminal controlling a recording function according to another embodiment of the present invention, and FIG. 6 is a flowchart of a method of controlling a recording function in a terminal according to the terminal illustrated in FIG. 5.

Referring to FIG. 5, a terminal controlling a recording function according to another embodiment of the present invention includes a receiving unit 510, an input unit 520, a control unit 530, a screen adjusting unit 540, a memory unit 550 and a display unit 570. The screen adjusting unit 540 includes a decoding unit 542, a setting unit 544 and an encoding unit 546.

The receiving unit 510 receives broadcast program information (S605). Since the receiving unit 510 has the same function and operation of the former receiving unit 110 shown in FIG. 1, a detailed explanation of the receiving step S605 by the receiving unit 510 is omitted in the following description.

The input unit 520 generates a broadcast selection signal for selecting a broadcast program and a broadcast recording signal for the selected broadcast program according to the received broadcast program information (S610).

Since the input unit 520 has the same function and operation of the former input unit 120 shown in FIG. 1, a detailed explanation of the generating step S610 by the input unit 520 is omitted in the following description.

The receiving unit 510 receives the selected broadcast program according to the broadcast selection signal (S615). Since the receiving unit 510 has the same function and operation of the former receiving unit 110 shown in FIG. 1, a detailed explanation of the receiving step S615 by the receiving unit 510 is omitted in the following description.

The control unit 530 determines an amount of available storage capacity of a terminal memory (S620). In particular, the control unit 530 measures available storage capacity of the memory unit 550. The storage capacity means an overall recording capacity of the memory unit 550 or a portion of the overall recording capacity determined by the user.

The control unit 530 determines whether the available storage capacity is smaller than or equal to a predetermined capacity (S625). The control unit 530 determines a minimum capacity necessary for a recording of a broadcast program to the predetermined capacity, and determine whether the available storage capacity is equal to or greater than the minimum capacity.

Alternatively, the control unit 530 sets a size of a broadcast program that is being recorded or to be recorded to the predetermined capacity, and determines whether the available storage capacity is smaller than or equal to the size of the broadcast program that is being recorded or to be recorded.

Alternatively, if two broadcast programs are selected, the control unit 530 sets the predetermined capacity for the first one of the two selected broadcast programs to a total capacity resulting from adding sizes of the two selected broadcast programs together. The control unit 530 determines whether the available storage capacity is smaller than or equal to the total capacity resulting from adding sizes of the two selected broadcast programs together.

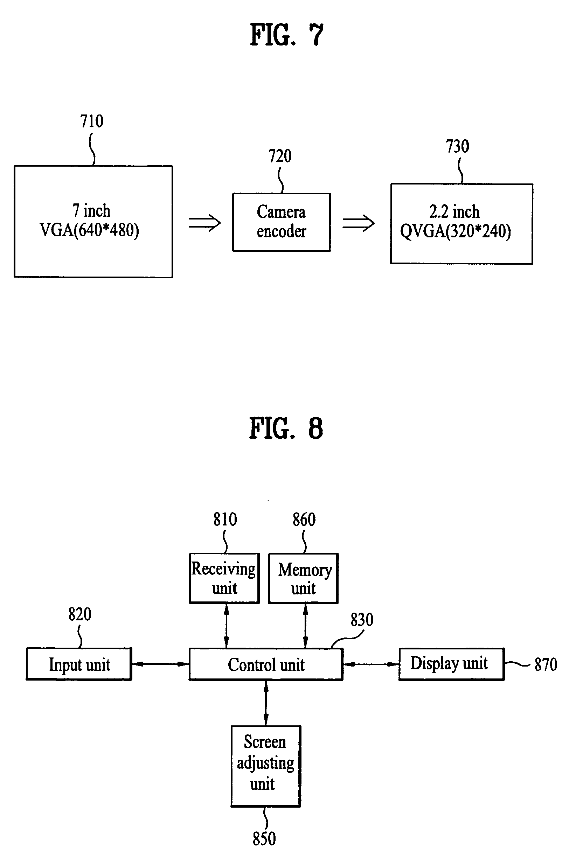

The control unit 530 determines whether a screen size of the broadcast program differs from that of the terminal (S630). If screen sizes 710 and 730 of the broadcast program and the mobile communication terminal, as shown in FIG. 7, are 7-inches and 2.2-inches, respectively, the control unit 530 determines that the screen sizes 710 and 730 differ from each other.

For instance, in DMB, a size of the screen 710 of the broadcast program is set to 7-inches to transmit the broadcast program. In this case, the screen 710 of the broadcast program uses VGA and its resolution is 640*480. Meanwhile, the terminal sets a size of the screen 730 to 2.2-inches to display the corresponding broadcast program. The screen 730 of the mobile communication terminal uses QVGA and its resolution is 320*240. Hence, the control unit 530 determines that the screen sizes differ from each other.

If it is determined that the screen sizes don't differ each other, the control unit 530 determines whether a screen size adjustment is selected by a user (S635). When the available storage capacity is smaller than or equal to the predetermined capacity or the user indicates a desire to change the size of the recorded broadcast, the control unit 530 generates a screen size adjustment signal (S640).

Preferably, when determining that the available storage capacity is insufficient to record the broadcast program, the control unit 530 decides to adjust the screen size. In case of determining that the screen sizes differ from each other as a result of the decision, the control unit 530 generates the screen size adjustment signal (S640).

Preferably, if the screen size of the broadcast program is greater than that of the mobile communication terminal, the control unit 530 generates the screen size adjustment signal (S640).

If the user provides a preferred screen size, the control unit 530 generates the screen size adjustment signal (S640) .

When adjusting the screen size of the broadcast program, the decoding unit 542 decodes a plurality of frames configuring the broadcast program respectively (S645). The decoding unit 542 decodes the frames to make the screen size of the broadcast program fit for the screen size of the terminal.

Alternatively, the decoding unit 542 decodes the frames to adjust the screen size of the broadcast program into a specific screen size.

The setting unit 544 sets a screen size to be recorded for the decoded frame (S650) to the screen size of the terminal. Alternatively, the setting unit 544 sets the screen size to be recorded to the screen size set by the user.

The encoding unit 546 encodes the decoded frame according to the set screen size (S655). The encoding step S655 is explained in detail with reference to FIG. 7 as follows.

The encoding unit 546 may include a camera encoder 720 provided to the terminal.

In DMB, a size of the screen 710 of the broadcast program is set to 7-inches to transmit the broadcast program. In this case, the screen 710 of the broadcast program uses VGA and its resolution is 640*480. The terminal displays the broadcast program on the screen 730 using QVGA having a resolution of 320*240.

The camera encoder 720 encodes the respective broadcast frames into frames suitable to be displayed on the screen 730 of the terminal.

The memory unit 550 stores the broadcast program with reference to the encoded frames according to the adjusted screen size (S660) or stores the broadcast program without an adjustment of screen size. The display unit 570 displays the broadcast program when the stored broadcast program is replayed.

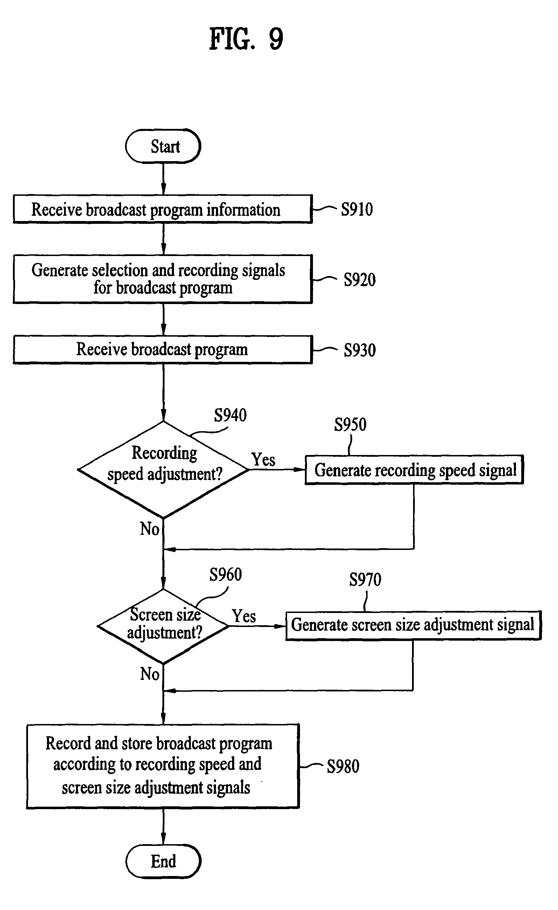

A terminal controlling a recording function and a method of controlling a recording function in the mobile communication terminal according to the present invention are explained in detail with reference to FIG. 8 and FIG. 9 as follows.

FIG. 8 is a block diagram of a terminal controlling a recording function according to another embodiment of the present invention, and FIG. 9 is a flowchart of a method of controlling a recording function in the terminal illustrated in FIG. 8.

Referring to FIG. 8, a terminal according to another embodiment of the present invention includes a receiving unit 810, an input unit 820, a control unit 830, a screen adjusting unit 850, a memory unit 860 and a display unit 870.

The receiving unit 810 receives broadcast program information (S910). Since the receiving unit 810 has the same function and operation of the former receiving unit 110 shown in FIG. 1, a detailed explanation of the receiving step S910 by the receiving unit 810 is omitted in the following description.

The input unit 820 generates a broadcast selection signal for selecting a broadcast program and a broadcast recording signal according to the received broadcast program information (S920).

Since the input unit 820 has the same function and operation of the former input unit 120 shown in FIG. 1, a detailed explanation of the generating step S920 by the input unit 820 is omitted in the following description.

The receiving unit 810 receives the selected broadcast program according to the broadcast selection signal (S930). Since the receiving unit 810 has the same function and operation of the former receiving unit 110 shown in FIG. 1, a detailed explanation of the receiving step S930 by the receiving unit 810 is omitted in the following description.

The control unit 830 determines whether to adjust a recording speed of the broadcast program (S940). The control unit 830 may accept input from a user, or may determine available storage capacity to calculate the recording speed of the broadcast program.

If the recording speed is to be adjusted, the control unit 830 generates the recording speed signal for recording the selected broadcast program (S950) and then checks to see if a screen size adjustment is necessary.

For instance, if the available storage capacity is 900Kb, if the size of the broadcast program is 27Mb and if a frame receiving speed is a 30 frames/s, the control unit 830 is able to set a 1 frame/s, which is 1/30 of the frame receiving speed, as the recording speed since the recording capacity corresponds to 1/30 of the size of the broadcast program. In this case, the '1 frame/s' means that 1 frame is stored among the 30 frames per second received according to the recording speed signal.

The control unit 830 determines whether to adjust a screen size of the broadcast program (S960). If the available storage capacity of the memory unit 860 is equal to or smaller than a predetermined capacity, the control unit 830 determines to adjust the screen size of the broadcast program. In this case, the predetermined capacity means a minimum capacity necessary for a recording of a broadcast program or the size of the received broadcast program.

If the screen size of the broadcast program differs from a screen size of the mobile communication terminal, the control unit 830 generates a screen size adjustment signal (S970). If the user provides an indication to adjust the screen sizes, the control unit 830 generates a screen size adjustment signal.

If the screen size is to be adjusted, the screen adjusting unit 850 adjusts the screen size of the broadcast program according to the screen size adjustment signal.

The screen adjusting unit 850 decodes a plurality of frames configuring the broadcast program respectively, sets a screen size to be recorded for the decoded frames, and then encodes the decoded frames according to the set screen size.

The memory unit 860 records and stores the broadcast program according to the recording speed signal and the screen size adjustment signal (S980).

The display unit 870 displays the stored broadcast program.

Accordingly, the present invention provides the following effects or advantages. First of all, if a recording capacity of a mobile communication terminal is smaller than a size of a broadcast program, the present invention enables the broadcast program to be efficiently stored.

Secondly, the present invention enables a recording speed of a broadcast program to be adjusted according to a recording capacity of a mobile communication terminal, thereby managing a memory capacity of the mobile communication terminal more efficiently.

Thirdly, a portion of a plurality of frames configuring a broadcast program can be selectively recorded according to a recording speed of the broadcast program, whereby a memory shortage problem of a mobile communication terminal can be solved.

Fourthly, the present invention is able to adjust a screen size of a broadcast program according to a recording capacity of a mobile communication terminal, thereby managing a capacity of a memory of the mobile communication terminal.

It will be apparent to those skilled in the art that various modifications and variations can be made in the present invention without departing from the spirit or scope of the inventions. Thus, it is intended that the present invention covers the modifications and variations of this invention provided they come within the scope of the appended claims and their equivalents.

## Claims

1. A mobile communication terminal controlling a recording function, the terminal comprising:
a receiving unit for receiving broadcast program information and a broadcast program, wherein the broadcast program comprises an audio portion and a video portion, wherein each of the audio portion and video portion are broadcast in a digital transmission format;
an input unit generating a broadcast selection signal and a broadcast recording signal according to the received broadcast program information;
a control unit for generating a recording speed signal; and
a memory unit storing the broadcast program according to the broadcast selection signal and the recording speed signal.

2. The terminal of claim 1, wherein the control unit generates the recoding speed signal according to an amount of available storage capacity of the memory unit.

3. The terminal of claim 2, wherein the control unit determines the amount of available storage capacity for storing the selected broadcast program according to the broadcast selection signal.

4. The terminal of claim 2, wherein the amount of available storage capacity is determined by a user.

5. The terminal of claim 1, wherein the control unit generates the recording speed signal according to a user's selection.

6. The terminal of claim 1, wherein frames selected from the video portion are stored in the memory unit according to the recording speed signal, and wherein the complete audio portion is stored in the memory unit.

7. The terminal of claim 6, wherein the audio portion is synchronized with the stored frames when the stored frames are replayed from the memory unit.

8. A mobile communication terminal controlling a recording function, the terminal comprising:
a receiving unit receiving broadcast program information and a broadcast program,
an input unit generating a broadcast selection signal and a broadcast recording signal according to the received broadcast program information;
a control unit for generating a screen size adjustment signal;
a screen size adjusting unit adjusting the size of the received broadcast program display according to the screen size adjustment signal; and
a memory unit storing the broadcast program according to the broadcast selection signal and the screen size adjustment signal.

9. The terminal of claim 8, wherein the screen size adjusting unit comprises:
a decoding unit decoding a plurality of frames of the selected broadcast program according to the broadcast selection signal; and
an encoding unit encoding each the decoded frames according to the screen size adjustment signal.

10. The terminal of claim 8, wherein the control unit generates the screen size adjustment signal according to an amount of available storage capacity of the memory unit.

11. The terminal of claim 10, wherein the control unit determines the amount of available storage capacity for storing the selected broadcast program according to the broadcast selection signal.

12. The terminal of claim 10, wherein the amount of available storage capacity is determined by a user.

13. The terminal of claim 8, wherein the control unit generates the screen size adjustment signal according to a user's selection.

14. The terminal of claim 8, wherein the selected broadcast program according to the broadcast selection signal is replayed from the memory unit.

15. A mobile communication terminal controlling a recording function, the terminal comprising:
a receiving unit for receiving broadcast program information and a broadcast program, wherein the broadcast program comprises an audio portion and a video portion, wherein each of the audio portion and video portion are broadcast in a digital transmission format;
an input unit generating a broadcast selection signal and a broadcast recording signal according to the received broadcast program information;
a control unit for generating a recording speed signal and a screen size adjustment signal;
a screen size adjusting unit adjusting a screen size of the broadcast program according to the screen size adjustment signal; and
a memory unit storing the received broadcast program according to the broadcast selection signal, the recording speed signal and the screen size adjustment signal.

16. The terminal of claim 15, wherein the screen size adjusting unit comprises:
a decoding unit decoding a plurality of frames of the selected broadcast program according to the broadcast selection signal; and
an encoding unit encoding each of the decoded frames according to the screen size adjustment signal.

17. The terminal of claim 15, wherein the control unit generates the recording speed signal and the screen size adjustment signal according to an amount of available storage capacity of the memory unit.

18. The terminal of claim 17, wherein the control unit determines the amount of available storage capacity for storing the selected broadcast program according to the broadcast selection signal.

19. The terminal of claim 17, wherein the amount of available storage capacity is determined by a user.

20. The terminal of claim 15, wherein the control unit generates the recording speed signal and the screen size adjustment signal according to a user's selection.

21. The terminal of claim 15, wherein frames selected from the video portion are stored in the memory unit according to the recording speed signal, and wherein the complete audio portion is stored in the memory unit.

22. The terminal of claim 21, wherein the audio portion is synchronized with the stored frames when the stored frames are replayed from the memory unit.

23. A method of controlling a recording function in a mobile communication terminal comprising:
receiving broadcast program information;
generating a broadcast selection signal for selecting a broadcast program and a broadcast recording signal according to the received broadcast program information;
receiving the selected broadcast program according to the broadcast selection signal, wherein the broadcast program comprises an audio portion and a video portion, and wherein each of the audio portion and video portion are broadcast in a digital transmission format;
generating a recording speed signal for the selected broadcast program according to an amount of available storage capacity of a terminal memory; and
recording the selected broadcast program in the terminal memory according to the recording speed signal.

24. The method of claim 23, wherein a control unit determines the amount of available storage capacity for storing the selected broadcast program.

25. The method of claim 23, wherein the amount of available storage capacity is determined by a user.

26. The method of claim 23, wherein frames selected from the video portion are stored in the terminal memory according to the recording speed signal, and wherein the complete audio portion is stored in the terminal memory.

27. The method of claim 26, wherein the audio portion is synchronized with the stored frames when the stored frames are replayed from the terminal memory.

28. A method of controlling a recording function in a mobile communication terminal comprising:
receiving broadcast program information;
generating a broadcast selection signal for selecting a broadcast program and a broadcast recording signal according to the received broadcast program information;
receiving the selected broadcast program according to the broadcast selection signal;
generating a screen size adjustment signal according to an amount of available storage capacity of a terminal memory;
converting a screen size of the selected broadcast program according to the screen size adjustment signal; and
recording the converted broadcast program in the terminal memory according to the screen size adjustment signal.

29. The method of claim 28, wherein the terminal determines the amount of available storage capacity for storing the selected broadcast program.

30. The method of claim 28, wherein the amount of available storage capacity is determined by a user.

31. The method of claim 28, wherein the converted broadcast program is replayed from the terminal memory.

32. A method of controlling a recording function in a mobile communication terminal comprising:
receiving broadcast program information;
generating a broadcast selection signal for selecting a broadcast program and a broadcast recording signal according to the received broadcast program information;
receiving the selected broadcast program according to the broadcast selection signal, wherein the broadcast program comprises an audio portion and a video portion, and wherein each of the audio portion and video portion are broadcast in a digital transmission format;
generating a recording speed signal for the selected broadcast program according to an amount of available storage capacity of a terminal memory;
generating a screen size adjustment signal according to the amount of available storage capacity;
converting a screen size of the selected broadcast program according to the screen size adjustment signal; and
recording the converted broadcast program in the terminal memory according to the screen size adjustment signal.

33. The method of claim 32, wherein the terminal determines the amount of available storage capacity for storing the selected broadcast program.

34. The method of claim 32, wherein the amount of available storage capacity is determined by a user.

35. The method of claim 32, wherein frames selected from the video portion of the converted broadcast program are stored in the terminal memory according to the recording speed signal, and wherein the complete audio portion is stored in the terminal memory.

36. The method of claim 35, wherein the audio portion is synchronized with the stored frames when the stored frames are replayed from the terminal memory.
